# EUROPÄISCHE PATENTSCHRIFT

(11) **EP 1 898 127 B1**
(45) Veröffentlichungstag und Bekanntmachung des Hinweises auf die Patenterteilung: **19.09.2012**
(21) Anmeldenummer: 07114816.7
(22) Anmeldetag: 23.08.2007
(51) Int. Cl.: F16H 61/02

(54) **Verfahren zum Betreiben einer Getriebevorrichtung mit mehreren hydraulisch betätigbaren Schaltelementen**
Method for operating a transmission device with several hydraulically operated switching elements
Procédé destiné au fonctionnement d'un dispositif d'engrenage à l'aide de plusieurs éléments de commutation pouvant être actionnés hydrauliquement

(30) Priorität: 07.09.2006 DE 102006041900
(43) Veröffentlichungstag der Anmeldung: 12.03.2008
(73) Patentinhaber: ZF Friedrichshafen AG, 88038 Friedrichshafen (DE)
(72) Erfinder: Schiele, Peter, 88079 Kressbronn (DE); Steinhauser, Klaus, 88079 Kressbronn (DE)

(56) Entgegenhaltungen:
- EP-A1- 0 309 591
- EP-A1- 0 992 714
- DE-A1-102005 001 563
- DE-C1- 19 961 796
- US-A1- 2003 017 912
- US-A1- 2003 045 988
- US-B1- 6 730 000

## Beschreibung

Die Erfindung betrifft ein Verfahren zum Betreiben einer Getriebevorrichtung mit mehreren hydraulisch betätigbaren Schaltelementen gemäß der im Oberbegriff des Patentanspruches 1 näher definierten Art.

Um einen Kraftstoffverbrauch sowie einen Ausstoß von Schadstoffemissionen von mit Verbrennungsmotoren ausgeführten und aus der Praxis bekannten Fahrzeugen zu reduzieren, ist dazu übergegangen worden, Verbrennungsmaschinen von Fahrzeugen mit Hilfe verschiedener Fahrzeugkonzepte in geeigneten Betriebszuständen der Fahrzeuge abzuschalten. Derartige Funktionen werden unter anderem als Motor-Start-Stopp-Funktionen bezeichnet, die in Abhängigkeit von Betriebszuständen verschiedenster Fahrzeugkomponenten aktiviert oder deaktiviert werden und selbst bei kurzen Fahrzeugstillständen ein Ab-schalten der Verbrennungsmaschine eines Fahrzeuges auslösen,

Damit ein herkömmlicher Fahrbetrieb durch eine Motor-Start-Stopp-Funktion nicht beeinträchtigt wird, ist bei einer fahrerseitig angeforderten Weiterfahrt und einem damit einhergehenden Start der Brennkraftmaschine des Fahrzeuges, insbesondere bei der Einfahrt in stark befahrene und vorfahrtberechtigte Straßen, ein kurzer Startvorgang der Verbrennungsmaschine und ein sofortiger Kraftflussaufbau in einer Getriebeeinrichtung des Fahrzeuges erforderlich. Bei herkömmlich ausgeführten Automatgetrieben oder automatisierten Schaltgetrieben, welche mit als nasslaufende Lamellenkupplungen ausgeführten Schaltelementen zum Zu- und Abschalten verschiedener Übersetzungsstufen der Getriebeeinrichtung ausgebildet sind, werden die Schaltelemente über eine Getriebepumpe im Wesentlichen nur bei laufendem Verbrennungsmotor mit dem erforderlichen Ansteuerdruck versorgt. Dabei wird der Ansteuerdruck bzw. ein Betätigungsdruck eines Schaltelementes jeweils über wenigstens einen elektrisch ausgeführten Aktor eingestellt.

So ist beispielsweise aus der DE 10 2005 001563 A1 ein Steuersystem für ein Automatgetriebe mit einer einzigen, vom Verbrennungsmotor angetriebenen Ölpumpe zur Versorgung der getriebeseitigen Schaltelemente mit Drucköl bekannt, bei dem zum Einstellen des Systemdrucks in der elektrohydraulischen Getriebesteuerung beim Wiederstart des zuvor durch eine Motor-Start-Stop-Automatik abgestellten Verbrennungsmotors eine definierte Abfolge mit folgenden Verfahrensschritten vorgesehen ist:
1.) Speichern der Wählhebelposition, aus der heraus der Motor durch die Motor-Start-Stop-Automatik abgestellt wird,
2.) beim Abstellen des Motors automatisches Ansteuern der Aktuatoren im Getriebe entsprechend einer sicheren Kupplungslogik (N oder P),
3.) Nachführen der gespeicherten Wählhebelposition entsprechend einer eventuell vom Fahrer bei abgestelltem Motor manuell vorgenommene Änderung der Wählhebelposition, und
4.) bei wieder laufendem Motor und wieder ausreichender Druckölversorgung automatisches Ansteuern der Aktuatoren im Getriebe entsprechend der gespeicherten Wählhebelposition.
Durch diese Verfahrensschrittabfolge wird sichergestellt, dass sich das Getriebe sowohl beim und nach dem Abstellen des Motors als auch beim Wiederherstellen des Kraftschlusses mit wieder gestartetem Motor stets in einem sicheren Schaltzustand befindet.

Beim Kraftflussaufbau in der Getriebeeinrichtung ist zunächst ein Lüfspiel eines zuzuschaltenden Schaltelementes zu überwinden und anschließend ist das zuschaltende Schaltelement durch ein Anheben des Betätigungsdruckes gemäß vorgegebener Zuschaltkennlinien vollständig zu schließen. Der Ausgleich des Lüftspiels eines Schaltelementes sowie dessen Zuschaltung in den Kraftfluss eines Getriebes wird jeweils durch Führen eines bestimmten Hydraulikfluidvolumenstromes in einen Kolbenraum der hydraulisch ansteuerbaren und zuzuschaltenden Kupplung erreicht, welcher von der durch die gestartete Verbrennungsmaschine angetriebenen Getriebepumpe bereit zu stellen ist.

So ist beispielsweise aus der EP 0 309 591 A1 ein Steuersystem für ein Automatgetriebe mit einem über zwei Kupplungen schaltbares 2-Gang-Hauptgetriebe, mit einem dem Hauptgetriebe vorgeschaltetes, über zwei weitere Kupplungen schaltbaren 2-Gang-Splittergetriebe, mit einer hydraulischen Versorgung für die vier Kupplungen, mit einem elektronisches Steuergerät zum Schalten der Kupplungen sowie mit eine Wähleinrichtung zur manuellen Auswahl des Ganges bekannt, bei dem dann, wenn bei einem Motorstart die Druckversorgung des Getriebes nicht ausreicht, um die für die entsprechend der Ganglogik zu schließenden zwei der vier Kupplungen gleichzeitig schließen zu können, zunächst die benötigte Kupplung des Splittergetriebes mit Öl befüllt wird und danach mit der Befüllung der benötigte Kupplung des Hauptgetriebes begonnen wird.

Sind vor einer Wiederanfahrt des Fahrzeuges aufgrund der abgeschalteten Verbrennungsmaschine mehrere Schaltelemente einer Getriebeeinrichtung geöffnet und für die Wiederanfahrt des Fahrzeuges zu schließen, verlängert sich die Zeit zwischen dem Beginn des Startvorganges der Verbrennungsmaschine und dem Zeitpunkt, zu welchem der Kraftfluss in der Getriebeeinrichtung vollständig hergestellt ist, unter Umständen derart, dass ein mit einer Motor-Start-Stopp-Funktion ausgeführtes Fahrzeug nicht in einem angestrebten Umfang betrieben werden kann.

Damit Fahrzeuge mit herkömmlich ausgebildeten Getriebeeinrichtungen mit implementierter Motor-Start-Stopp-Funktion trotzdem in gewünschter Art und Weise betrieben werden können, ist bei an sich bekannten Fahrzeugen neben der Getriebehauptpumpe eine weitere elektromotorisch betriebene Hydraulikpumpe vorgesehen, deren Fördervolumen von der Drehzahl der Verbrennungsmaschine unabhängig ist und die bei fehlender Druckversorgung über die Getriebehauptpumpe der Getriebeeinrichtung im Hydrauliksystem im Zusammenspiel mit den elektrischen Aktoren der Getriebeeinrichtung für die zu betätigenden Schaltelemente zumindest einen Druck erzeugt, mittels dem das Lüftspiel der jeweils zur Herstellung des Kraftflusses in der Getriebeeinrichtung zuzuschaltenden Schaltelemente ausgleichbar ist.

Nachteilhafterweise führt die vorbeschriebene Ausgestaltung einer Getriebeeinrichtung mit einer von der Verbrennungsmaschine antreibbaren Getriebehauptpumpe und einer elektromotorisch antreibbaren Zusatzpumpe im Vergleich zu Getriebeeinrichtungen, die ohne Zusatzpumpe ausgebildet sind, zu einer Verschlechterung des Getriebewirkungsgrades und zu einer Erhöhung der Herstellkosten einer Getriebeeinrichtung.

Den Getriebewirkungsgrad nur unwesentlich beeinträchtigende und die Herstellkosten nur in geringem Umfang erhöhende Maßnahmen, um ein mit einer Motor-Start-Stopp-Funktion betriebenes Fahrzeug mit einer gewünschten Spontaneität betreiben zu können, sind aus der nicht vorveröffentlichten DE 10 2006 014 756.1 bekannt. Zur ausreichenden Versorgung einer Getriebeeinrichtung bei Vorliegen einer Anforderung zum Zuschalten einer Brennkraftmaschine wird eine Vorrichtung zum Speichern von Hydraulikfluid eines Hydrauliksystems einer Getriebeeinrichtung sowie ein Verfahren zum Betreiben einer derartigen Vorrichtung vorgeschlagen, wobei die Vorrichtung bzw. die Hydraulikspeichereinrichtung als ein federbelasteter Ölvolumenspeicher mit elektromechanischer Rastierung ausgeführt ist.

Die Hydraulikspeichereinrichtung wird während der zugeschalteten Brennkraftmaschine mittels eines von einer Getriebehauptpumpe erzeugten hydraulischen Druckes befüllt, wobei ein Kolben der Hydraulikspeichereinrichtung mit zunehmendem Befüllgrad der Hydraufikspeichereinrichtung in eine Stellung verbracht wird, in der dieser von einer Halteeinrichtung arretiert und gehalten wird. Bei einem Abschalten der Brennkraftmaschine, bei dem der Antrieb der Getriebehauptpumpe Null ist, sinkt der Hydraulikdruck im Hydrauliksystem der Getriebeeinrichtung im Wesentlichen auf Null ab. Liegt von einer Motor-Start-Stopp-Funktion eine Anforderung zum Zuschalten der Brennkraftmaschine vor, wird die Herstellung des Kraftflusses in der Getriebeeinrichtung durch Ausschieben des in der Hydraulikspeichereinrichtung gespeicherten Hydraulikfluidvolumens während eines Zuschaltvorganges der Brennkraftmaschine auf einfache Art und Weise unterstützt.

Des Weiteren wird bei Erreichen des durch die Abschaltung der Brennkraftmaschine bewirkten drucklosen Zustandes im Hydrauliksystem der Getriebeeinrichtung eine Bestromung der elektrischen Aktoren auf ein sogenanntes Bereitschaftsniveau eingestellt, zu dem über die Aktoren in der Getriebeeinrichtung lediglich sogenannte Diagnosefunktionen durchführbar sind und zu dem eine elektrische Aufnahmeleistung der Getriebeeinrichtung minimiert ist, um ein Bordnetz des Fahrzeuges in nicht unerheblichem Umfang entlasten zu können. Darüber hinaus wird die Bestromung der Aktoren bei Vorliegen einer Anforderung von der Motor-Start-Stopp-Funktion zum Zuschalten der Brennkraftmaschine bzw. beim Erkennen eines Starts der Brennkraftmaschine vom Bereitschaftsniveau auf ein Betriebsniveau, zu welchem die Aktoren jeweils mit einem zu einem angeforderten Betriebszustand, wie einem Einlegen einer Gangstufe, einem neutralen Betriebszustand oder einem Parkbetriebszustand, äquivalenten Stromwert bestromt werden, verändert. Durch die Veränderung der Bestromung der Aktoren vom Bereitschaftsniveau auf das Betriebsniveau werden die zur Darstellung des gewünschten Betriebszustandes der Getriebeeinrichtung zuzuschaltenden Schaltelemente gleichzeitig vom Hydrauliksystem der Getriebeeinrichtung mit Hydraulikfluid beaufschlagt und befüllt.

Die Reihenfolge, in der die Schaltelemente jeweils ihre für die Darstellung des angeforderten Betriebszustandes der Getriebeeinrichtung erforderliche Übertragungsfähigkeit erreichen, ist im Wesentlichen von den Befüllströmungswiderständen in den Leitungen des Hydrauliksystems und den zu befüllenden Kupplungsvolumina abhängig. Diese Abhängigkeiten führen während eines Startvorganges einer Brennkraftmaschine unter Umständen zu unerwünschten Betriebszustandsverläufen innerhalb der Getriebeeinrichtung, bei welchen getriebeinterne Drehmassen zunächst beschleunigt werden und anschließend über das Schaltelement, welches zuletzt seine vorgesehene Übertragungsfähigkeit erreicht, synchronisiert und unerwünschterweise abgebremst werden. Daraus resultieren in der Getriebeeinrichtung undefinierte Drehzahlzustände, die ein nicht reproduzierbares Verhalten zur Folge haben und unter Umständen einen Fahrkomfort herabsetzenden Stoß im Antriebsstrang bewirken.

Der vorliegenden Erfindung liegt daher die Aufgabe zugrunde, ein Verfahren zum Betreiben einer Getriebevorrichtung zur Verfügung zu stellen, mittels welchem eine Beeinträchtigung eines Fahrkomforts eines Fahrzeuges vermieden wird.

Erfindungsgemäß wird diese Aufgabe mit einem Verfahren gemäß den Merkmalen des Patentanspruches 1 gelöst.

Die DE 10 2005 001563 A1 offenbart ein Verfahren gemäß dem Oberbegriff des Anspruchs 1.

Bei dem erfindungsgemäßen Verfahren zum Betreiben einer Getriebevorrichtung mit mehreren von einer Druckquelle hydraulisch betätigbaren Schaltelementen zum Zu- und Abschalten verschiedener Übersetzungsstufen und mit mehreren elektrischen Aktoren eines Hydrauliksystems der Getriebevorrichtung zum Einstellen von Betätigungsdrücken für die Schaltelemente wird die Bestromung der Aktoren bei Vorliegen einer Anforderung einer Motor-Start-Stopp-Funktion zum Abschalten einer Brennkraftmaschine eines die Getriebevorrichtung aufweisenden Antriebsstranges von einem Betriebsniveau, auf dem die Aktoren jeweils mit einem zu einem betriebszustandsabhängigen Betätigungsdruck der Schaltelemente äquivalenten Stromwert bestromt werden, auf ein Bereitschaftsniveau eingestellt und bei einer Anforderung der Motor-Start-Stopp-Funktion zum Zuschalten der Brennkraftmaschine vom Bereitschaftsniveau auf das Betriebsniveau eingestellt.

Erfindungsgemäß wird das Verändern der Bestromung ausgehend vom Bereitschaftsniveau auf das Betriebsniveau der Aktoren zeitlich in einer definierten Reihenfolge durchgeführt, so dass sich auch eine definierte Reihenfolge bezüglich des Erreichens der einzustellenden Übertragungsfähigkeiten der an der Darstellung eines angeforderten Betriebszustandes der Getriebeeinrichtung beteiligten Schaltelemente ergibt und Drehmasseneffekte während eines Zuschaltvorganges der Brennkraftmaschine bzw. Drehmomentschwankungen, welche für einen Fahrer über einen Getriebeabtrieb spürbar sind, in einem einen Fahrkomfort erhöhenden Umfang gegenüber herkömmlich betriebenen Getriebeeinrichtungen minimiert sind.

Das bedeutet, dass die Bestromung der elektrischen Aktoren derart nacheinander vom Bereitschaftsniveau auf das Betriebsniveau verändert wird, dass ein Beschleunigen von rotatorischen Getriebemassen und ein anschließendes Abbremsen dieser Getriebemassen vermieden oder zumindest minimiert wird.

Weitere Vorteile und vorteilhafte Weiterbildungen der Erfindung ergeben sich aus den Patentansprüchen und den unter Bezugnahme auf die Zeichnung prinzipmäßig beschriebenen Ausführungsbeispiel.
Es zeigt:
- Fig. 1: eine stark schematisierte Darstellung eines Fahrzeuges mit einem eine Getriebevorrichtung und eine Brennkraftmaschine aufweisenden Antriebsstrang und
- Fig. 2: mehrere zeitliche Verläufe verschiedener Betriebszustandsparameter des Antriebsstranges des Fahrzeuges gemäß Fig. 1.

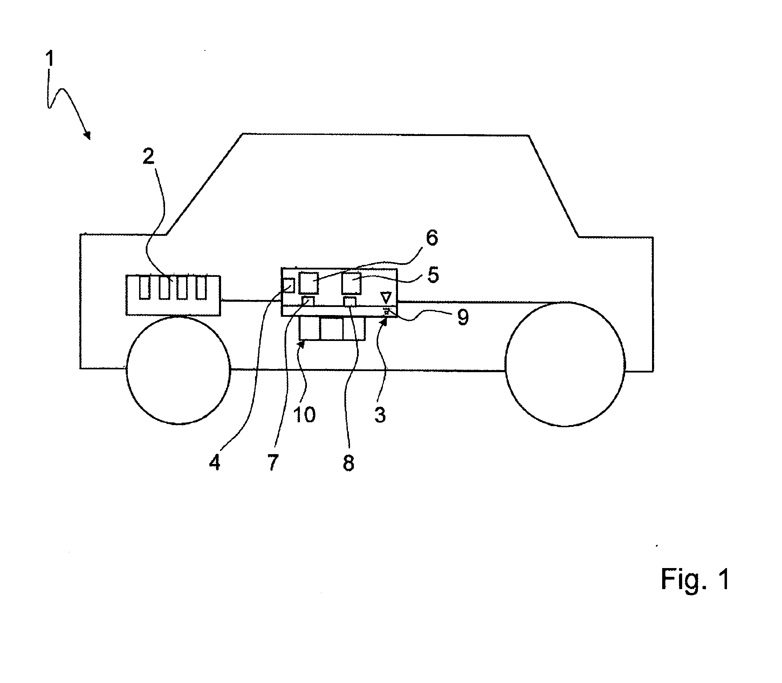

In Fig. 1 ist ein Fahrzeug 1 mit einer Brennkraftmaschine 2 und einer Getriebevorrichtung 3 mit mehreren von einer Druckquelle 4 zum Zu- und Abschalten verschiedener Übersetzungsstufen mit hydraulischem Druck beaufschlagbaren Schaltelementen 5, 6 und mit mehreren elektrischen Aktoren 7, 8 eines Hydrauliksystems der Getriebevorrichtung 3 zum Einstellen von Betätigungsdrücken für die Schaltelemente 5, 6 dargestellt.

Die Getriebevorrichtung 3 kann grundsätzlich jedes aus der Praxis bekannte automatisierte Handschaltgetriebe oder Automatgetriebe sein, welches mit mindestens einem hydraulisch ansteuerbaren Schaltelement, hier im Beispiel mit mindestens zwei hydraulisch ansteuerbaren Schaltelementen 5, 6, wie beispielsweise reibschlüssigen Lamellenkupplungen oder Lamellenbremsen, ausgebildet ist.

Für eine Verbrauchsoptimierung und eine Reduzierung von Schadstoffemissionen des Fahrzeuges 1 ist eine sogenannte Motor-Start-Stopp-Funktion vorgesehen, durch welche die Brennkraftmaschine 2 in vordefinierten Betriebszuständen des Fahrzeuges 1 abgeschaltet und bei Vorliegen eines oder mehrerer vordefinierter Startkriterien wieder gestartet wird.

So wird die Brennkraftmaschine 2 beispielsweise bei aktiviertem Bremslicht und im Fahrzeugstillstand und/oder bei fahrerseitig betätigtem Bremspedal des Fahrzeugbetriebsbremssystems selbst während sehr kurzer Stillstandsphasen des Fahrzeuges bei Vorliegen einer Wählhebelposition "D" für Vorwärtsfahrt abgeschaltet und bei Vorliegen verschiedener Startkriterien, wie beispielsweise bei Unterschreiten einer Bremsdruckschwelle, bei einem Lösen der Fahrzeugbremse, bei deaktiviertem Bremslicht, bei einer fahrerseitigen Wählhebelbetätigung in eine Position, in der ein Start der Brennkraftmaschine 2 angefordert wird, bei einer Betätigung des Gaspedals größer oder kleiner als ein Schwellwert, bei einer steuersystemseitigen Ankündigung eines Startvorganges der Brennkraftmaschine, bei Vorliegen einer Abtriebsdrehzahl größer oder kleiner eines Schwellwertes, bei Vorliegen einer vordefinierten Ladebilanz eines elektrischen Speichers des Fahrzeuges oder in Abhängigkeit von Komfortkriterien, wie eine Anforderung zur Klimatisierung der Fahrgastzelle, wieder gestartet.

Zusätzlich ist die Getriebeeinrichtung 3 vorliegend mit einem in der Zeichnung nicht näher dargestellten Hydrauliksystem, einem Ölsumpf 9 und einer Hydraulikspeichereinrichtung 10 zum Speichern von Hydraulikfluid des Hydrauliksystems der Getriebeeinrichtung 3 ausgebildet.

Die der Getriebevorrichtung 3 zugeordnete Hydraulikspeichereinrichtung entspricht einer in der DE 10 2006 014 756.1 beschriebenen Vorrichtung zum Speichern von Hydraulikfluid eines Hydrauliksystems einer Getriebeeinrichtung und wird gemäß dem dort ebenfalls vorgeschlagenen Verfahren betrieben.

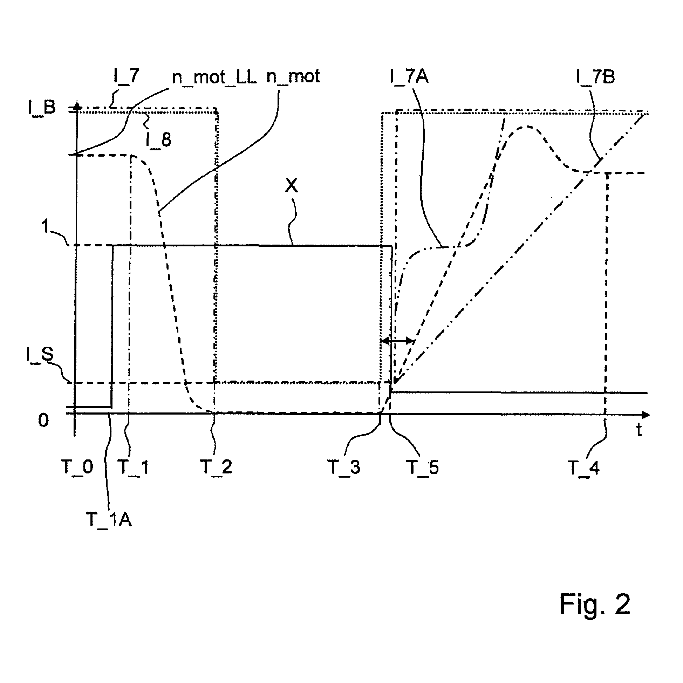

Eine Bestromung der Aktoren 7 und 8 wird bei Vorliegen einer Anforderung der Motor-Start-Stopp-Funktion zum Abschalten der Brennkraftmaschine 2 in der in Fig. 2 über der Zeit t dargestellten Art und Weise von einem Betriebsniveau I_B, auf dem die Aktoren 7 und 8 jeweils mit einem zu einem betriebszustandsabhängigen Betätigungsdruck der Schaltelemente 7 und 8 äquivalenten Stromwert bestromt werden, auf ein Bereitschaftsniveau I_S eingestellt, wobei die Bestromung der Aktoren 7 und 8 bei einer Anforderung der Motor-Start-Stopp-Funktion zum Zuschalten der Brennkraftmaschine 2 vom Bereitschaftsniveau I_S wiederum auf das Betriebsniveau I_B eingestellt wird.

Zu einem Zeitpunkt T_0 befindet sich das mit der Getriebevorrichtung 3 ausgeführte Fahrzeug 1 nahe einem Fahrzeugstillstand und die Brennkraftmaschine wird mit einer Motordrehzahl n_mot betrieben, welche im Wesentlichen einer Leerlaufdrehzahl n_mot_LL entspricht. Zu einem Zeitpunkt T_1 wird die Brennkraftmaschine 2 von der Motor-Start-Stopp-Funktion abgeschaltet und die Motordrehzahl n_mot sinkt von der Leerlaufdrehzahl n_mot_LL bis zu einem Zeitpunkt T_2 im Wesentlichen auf Null ab.

Die Anforderung der Motor-Start-Stopp-Funktion zum Abschalten der Brennkraftmaschine 2 ist dem Zeitpunkt T_1 zeitlich vorgelagert und bewirkt zusätzlich, dass die der Getriebevorrichtung 3 zugeordnete Hydraulikspeichereinrichtung 10 vor dem Abschaltzeitpunkt der Brennkraftmaschine 2 vollständig befüllt und in ihrem vollständig befüllten Zustand durch eine Halteeinrichtung arretiert und gehalten wird, wobei der Status der Hydraulikspeichereinrichtung 10 beziehungsweise der diese im vollständig befüllten Zustand haltenden Halteeinrichtung durch den Verlauf X wiedergegeben ist, der zwischen dem Zeitpunkt T_0 und einem Zeitpunkt T_1A, welcher dem Zeitpunkt T_1 zeitlich vorgelagert ist, den Wert Null aufweist.

Der Wert Null des Verlaufes X kennzeichnet einen Betriebszustand der Hydraulikspeichereinrichtung 10, in weichem diese nicht vollständig befüllt ist beziehungsweise nicht von der Halteeinrichtung in ihrem vollständig befüllten Zustand gehalten wird. Zum Zeitpunkt T_1A geht die Halteeinrichtung in einen die Hydraulikspeichereinrichtung 10 in ihren vollständig befüllten Betriebszustand haltenden Zustand über und der Verlauf X nimmt sprungartig den Wert 1 an.

Die Verläufe I_7 und I_8 der Bestromungswerte der Aktoren 7 und 8 der Getriebevorrichtung 3 werden vorliegend sprungförmig zum Zeitpunkt T_2 vom Betriebsniveau I_B auf das Bereitschaftsniveau I_S abgesenkt, um ein Bordnetz des Fahrzeuges 1 auf einfache Art und Weise zu entlasten. Die Aktoren 7 und 8 befinden sich zum Zeitpunkt T_2 aufgrund der Bestromung auf dem Bereitschaftsniveau in einem Zustand, in dem verschiedene aus der Praxis bekannte Diagnosefunktionen in der Getriebevorrichtung 3 durchführbar sind, um verschiedene Funktionalitäten der Getriebevorrichtung überprüfen zu können.

Zu einem Zeitpunkt T_3 wird die Brennkraftmaschine 2 von der Motor-Start-Stopp-Funktion wieder gestartet, wodurch die Motordrehzahl n_mot in der in Fig. 2 dargestellten Art und Weise ansteigt und zu einem Zeitpunkt T_4 wiederum die Motordrehzahl n_mot_LL erreicht. Gleichzeitig wird die Bestromung des Aktors 8 zum Zeitpunkt T_3 sprungartig vom Bereitschaftsniveau I_S auf das Betriebsniveau I_B angehoben, so dass der Aktor 8 zum Zeitpunkt T_3 mit der zur Darstellung eines angeforderten Betriebszustandes der Getriebevorrichtung erforderlichen Stromwert bestromt wird und das Schaltelement 5 oder das Schaltelement 6 bei entsprechend vom Hydrauliksystem anstehenden Druck mit dem für den Betriebszustand der Getriebevorrichtung 3 erforderlichen Betätigungsdruck beaufschlagt wird.

Der Aktor 7 wird vorliegend erst zu einem Zeitpunkt T_5, der dem Zeitpunkt T_3 zeitlich nachgelagert ist, vom Bereitschaftsniveau I_S auf das Betriebsniveau I_B angehoben, so dass der Aktor 7 später als der Aktor 8 mit dem zur Darstellung eines angeforderten Betriebszustandes der Getriebevorrichtung 3 erforderlichen Stromwert bestromt wird und das Schaltelement 5 oder das Schaltelement 6 mit dem Betriebsniveau korrespondierenden Betätigungsdruck beaufschlagt wird.

Zusätzlich wird die Arretierung der Hydraulikspeichereinrichtung 10 durch die Halteeinrichtung im Bereich des Zuschaltzeitpunktes T_3 der Brennkraftmaschine 2 gelöst und das in der Hydraulikspeichereinrichtung 10 gespeicherte Hydraulikfluidvolumen zur Erhöhung einer Spontaneität des Fahrzeuges 1 in bekannter Art und Weise in das Hydrauliksystem der Getriebevorrichtung 3 eingespeist und somit bereits vor Erreichen einer für die Erzeugung einer hydraulikpumpenseitigen Druckversorgung erforderlichen Motordrehzahl der Brennkraftmaschine 2 ein entsprechendes Druckniveau im Hydrauliksystem erzeugt.

Aufgrund der zeitlich zueinander versetzten Veränderung der Bestromung der Aktoren 7 und 8 vom Bereitschaftsniveau I_S auf das Betriebsniveau I_B wird das vom Aktor 8 angesteuerte Schaltelement 5 oder 6 seine zur Darstellung des angeforderten Betriebszustandes der Getriebevorrichtung 3 äquivalenten Übertragungsfähigkeit früher erreichen als das vom Aktor 7 angesteuerte Schaltelement 6 oder 5.

Damit wird auf einfache Art und Weise erreicht, dass über das Schaltelement 5 oder 6 in den Kraftfluss des Antriebsstranges des Fahrzeuges 1 zuzuschaltende rotatorische Drehmassen der Getriebevorrichtung 3 beschleunigt werden und durch das über den Aktor 8 später zugeschaltete Schaltelement 6 oder 5 synchronisiert werden, ohne im Getriebe undefinierte Drehzahlzustände zu erzeugen.

Um besonders harmonische Zuschaltzustände in der Getriebevorrichtung 3 zu erhalten, ist es bei weiteren vorteilhaften Varianten des erfindungsgemäßen Verfahrens vorgesehen, die Veränderung der Bestromung zwischen dem Bereitschaftsniveau und dem Betriebsniveau wenigstens eines Aktors in der durch die Verläufe I_7A und I_7B dargestellten Art und Weise moduliert durchzuführen und die Übertragungsfähigkeit des von dem Aktor 7 angesteuerten Schaltelementes 5 oder 6 derart definiert anzuheben, dass durch den Zuschaltvorgang des Schaltelementes 5 oder 6 keine für einen Fahrer merkbare und einen Fahrkomfort beeinträchtigende Drehmomentschwankungen im Antriebsstrang des Fahrzeuges 1 beziehungsweise im Bereich des Abtriebs des Antriebsstranges erzeugt werden.

Der zeitliche Abstand zwischen der Veränderung der Bestromung der verschiedenen Aktoren einer Getriebevorrichtung erfolgt unter anderem in Abhängigkeit der Befüllströmungswiderstände im Hydrauliksystem der Getriebevorrichtung 3 sowie den jeweils zu befüllenden Kupplungsvolumina der Schaltelemente 5 und 6, um eine möglichst günstige Reihenfolge der Zuschaltzeitpunkte der zum Darstellen eines angeforderten Betriebszustandes der Getriebevorrichtung 3 zuzuschaltenden Schaltelemente zu erreichen.

Weitere an der Darstellung eines angeforderten Betriebszustandes der Getriebevorrichtung nicht beteiligte Aktoren werden vor dem Lösen der Rastierung beziehungsweise der Halteeinrichtung und dem damit verbundenen Öleinschuss des in der Hydraufikspeichereinrichtung gespeicherten Hydraulikfluidvolumens in das Hydrauliksystem der Getriebevorrichtung ebenfalls vom Bereitschaftsniveau I_S auf ihr Betriebsniveau geführt. Das Betriebsniveau der Bestromung derartiger Aktoren ist im Wesentlichen Null, wenn die Aktoren als fallende Druckregler ausgebildet und im stromlosen Zustand druckbeaufschlagt sind. Damit wird auf einfache Art und Weise eine Fehlbefüllung von von derartigen Aktoren angesteuerten Schaltelementen vermieden.

### Bezugszeichen

- 1: Fahrzeug
- 2: Brennkraftmaschine
- 3: Getriebevorrichtung
- 4: Druckquelle
- 5: Schaltelement
- 6: Schaltelement
- 7: Aktor
- 8: Aktor
- 9: Ölsumpf
- 10: Hydraulikspeichereinrichtung

- t: Zeit
- T_0 bis T_5: diskreter Zeitpunkt
- I_B: Betriebsniveau
- I_S: Bereitschaftsniveau
- n_mot: Motordrehzahl
- n_mot_LL: Leerlaufdrehzahl
- X: Verlauf
- I_7: Verlauf
- I_8: Verlauf
- I_7A: Verlauf
- I_7B: Verlauf

## Patentansprüche

1. Verfahren zum Betreiben einer Getriebevorrichtung (3) mit mehreren von einer Druckquelle (4) hydraulisch betätigbaren Schaltelementen (5, 6) zum Zu- und Abschalten verschiedener Übersetzungsstufen und mit mehreren elektrischen Aktoren (7, 8) eines Hydrauliksystems der Getriebevorrichtung (3) zum Einstellen von Betätigungsdrücken für die Schaltelemente (5, 6), wobei die Bestromung der Aktoren (7, 8) bei Vorliegen einer Anforderung einer Motor-Start-Stopp-Funktion zum Abschalten einer Brennkraftmaschine (2) eines die Getriebevorrichtung (3) aufweisenden Antriebsstranges von einem Betriebsniveau (I_B), auf dem die Aktoren (7, 8) jeweils mit einem zu einem betriebszustandsabhängigen Betätigungsdruck der Schaltelemente (5, 6) äquivalenten Stromwert bestromt werden, auf ein Bereitschaftsniveau (I_S) eingestellt wird, und wobei die Bestromung der Aktoren (7, 8) bei einer Anforderung der Motor-Start-Stopp-Funktion zum Zuschalten der Brennkraftmaschine (2) vom Bereitschaftsniveau (I_S) auf das Betriebsniveau (I_B) eingestellt wird,
**dadurch gekennzeichnet,**
**dass** das Verändern der Bestromung ausgehend vom Bereitschaftsniveau (I_S) auf das Betriebsniveau (I_B) der Aktoren (7, 8) zeitlich in einer definierten Reihenfolge durchgeführt wird,
derart, dass die durch das definierte Verändern der Bestromung der Aktoren (7, 8) vom Bereitschaftsniveau (I_S) zu dem Betriebsniveau (I_B) bewirkten Beschleunigungen rotatorischer Massen der Getriebevorrichtung (3) aufeinander abgestimmt erfolgen.

2. Verfahren nach Anspruch 1, **dadurch gekennzeichnet, dass** die Veränderung der Bestromung wenigstens eines Aktors (7) moduliert erfolgt.

3. Verfahren nach Anspruch 2, **dadurch gekennzeichnet, dass** die Modulation in Abhängigkeit wenigstens eines Ereignisses durchgeführt wird.

4. Verfahren nach Anspruch 1, 2 oder 3, dadurch gekennzeichn e t , dass eine mit dem Hydrauliksystem verbundene Hydraulikspeichereinrichtung (10) bei einer Anforderung zum Starten der Brennkraftmaschine (2) zu einem betriebszustandsabhängig ermittelten Zeitpunkt vor, zu oder nach dem Zuschalten der Brennkraftmaschine (2) ein gespeichertes Hydraulikfluidvolumen in das Hydrauliksystem einleitet.

5. Verfahren nach Anspruch 4, **dadurch gekennzeichnet, dass** die Bestromung von Aktoren, welche bei zugeschalteter Brennkraftmaschine (2) zur Darstellung eines Betriebszustandes der Getriebeeinrichtung die jeweils zugeordneten Schaltelemente mit einem Betätigungsdruck beaufschlagen, zu dem diese im wesentlichen mit einer Übertragungsfähigkeit gleich Null vorliegen, vor dem Einleitzeitpunkt des Hydraulikfluidvolumens der Hydraulikspeichereinrichtung (10) in das Hydrauliksystem von dem Bereitschaftsniveau (I_S) auf das Betriebsniveau (I_B) geführt wird.

## Claims

1. Method for operating a geared device (3) having a plurality of shift elements (5, 6) which can be activated hydraulically by a pressure source (4) and have the purpose of switching on and off various transmission stages and having a plurality of electrical actuators (7, 8) of a hydraulic system of the geared device (3) for setting activation pressures for the shift elements (5, 6), wherein the actuators (7, 8) are energized when a request is present from an engine start/stop function to switch off an internal combustion engine (2) of a drive train, having the geared device (3), from an operating level (I_B) at which the actuators (7, 8) are each energized with a current value which is equivalent to an activation pressure of the shift elements (5, 6) which is dependent on an operating state to a standby level (I_S), and wherein the energization of the actuators (7, 8) is set from the standby level (I_S) to the operating level (I_B) when there is a request from the engine start/stop function to switch on the internal combustion engine (2),
**characterized**
**in that** the changing of the energization starting from the standby level (I_S) to the operating level (I_B) of the actuators (7, 8) takes place temporally in a defined sequence
such that the accelerations of rotational masses of the geared device (3) which are brought about by the defined changing of the energization of the actuators (7, 8) from the standby level (I_S) to the operating level (I_B) occur in such a way that they are matched to one another.

2. Method according to Claim 1, **characterized in that** the changing of the energization of at least one actuator (7) occurs in a modulated fashion.

3. Method according to Claim 2, **characterized in that** the modulation is carried out as a function of at least one event.

4. Method according to Claim 1, 2 or 3, **characterized in that**, when there is a request to start the internal combustion engine (2) at a time determined as a function of an operating state before, when or after the internal combustion engine (2) is switched on, a hydraulic storage device (10) which is connected to the hydraulic system introduces a stored volume of hydraulic fluid into the hydraulic system.

5. Method according to Claim 4, **characterized in that** the energization of actuators which, when the internal combustion engine (2) is switched on, apply an activation pressure to the respectively assigned switch elements in order to bring about an operating state of the geared device, at which activation pressure said shift elements are present substantially with a transmission capability which is equal to zero, is adjusted from the standby level (I_S) to the operating level (I_B) before the time when the hydraulic fluid volume of the hydraulic storage device (10) is introduced into the hydraulic system.

## Revendications

1. Procédé destiné au fonctionnement d'un dispositif de boîte de vitesses (3) à l'aide de plusieurs éléments de changement de vitesse (5, 6) pouvant être actionnés de façon hydraulique par une source de pression (4) afin de connecter et déconnecter différents étages de réduction et à l'aide de plusieurs actionneurs (7, 8) électriques d'un système hydraulique du dispositif de boîte de vitesses (3) afin de régler les pressions d'actionnement des éléments de changement de vitesse (5, 6), l'alimentation en courant des actionneurs (7, 8) en présence d'une demande d'une fonction marche-arrêt du moteur de déconnecter un moteur à combustion interne (2) d'une chaîne de transmission comprenant le dispositif de boîte de vitesses (3) est réglée d'un niveau de fonctionnement (I_B) auquel les actionneurs (7, 8) sont respectivement alimentés à une valeur de courant équivalente à une pression d'actionnement des éléments de changement de vitesse (5, 6) dépendant d'un état de fonctionnement pour atteindre un niveau de veille (I_S) et l'alimentation en courant des actionneurs (7, 8) étant réglée en présence d'une demande de la fonction marche-arrêt du moteur de connecter le moteur à combustion interne (2) du niveau de veille (I_S) au niveau de fonctionnement (I_B) ;
**caractérisé en ce que** :
la modification de l'alimentation en courant du niveau de veille (I_S) au niveau de fonctionnement (I_B) des actionneurs (7, 8) se réalise selon une séquence définie dans le temps ;
de telle sorte que les accélérations provoquées par la variation définie de l'alimentation en courant des actionneurs (7, 8) du niveau de veille (I_S) au niveau de fonctionnement (I_B) produisent l'harmonisation des masses en rotation du dispositif de boîte de vitesses (3) les unes par rapport aux autres.

2. Procédé selon la revendication 1, **caractérisé en ce que** la variation de l'alimentation en courant d'au moins un actionneur (7) se produit de façon modulée.

3. Procédé selon la revendication 2, **caractérisé en ce que** la modulation est réalisée en fonction d'au moins un événement.

4. Procédé selon la revendication 1, 2 ou 3, **caractérisé en ce qu'**un dispositif d'accumulation hydraulique (10) relié au système hydraulique introduit, à la suite d'une demande de démarrage du moteur à combustion interne (2), un volume de fluide hydraulique accumulé dans le système hydraulique à un instant calculé en fonction de l'état de fonctionnement, soit avant, soit pendant, soit après la connexion du moteur à combustion interne (2).

5. Procédé selon la revendication 4, **caractérisé en ce que** l'alimentation en courant des actionneurs alimentant les éléments de changement de vitesse respectivement associés en présence d'un moteur à combustion interne (2) connecté pour représenter un état de fonctionnement du dispositif de boîte de vitesses à une pression d'actionnement permettant que lesdits éléments présentent pour l'essentiel une capacité de transmission nulle, avant le point d'introduction du volume de fluide hydraulique du dispositif d'accumulation hydraulique (10) dans le système hydraulique, pour passer du niveau de veille (I_S) au niveau de fonctionnement (I_B).
